# EUROPÄISCHE PATENTSCHRIFT

(11) **EP 1 038 884 B1**
(45) Veröffentlichungstag und Bekanntmachung des Hinweises auf die Patenterteilung: **21.01.2004**
(21) Anmeldenummer: 00105435.2
(22) Anmeldetag: 15.03.2000
(51) Int. Cl.: C08F 8/00, C08F 16/12

(54) **Verfahren zur Herstellung von modifizierten Vinyletherpolymeren**
Process for the preparation of modified vinyl ether polymers
Procédé de préparation de polymères de vinyléther modifiés

(30) Priorität: 26.03.1999 DE 19913725
(43) Veröffentlichungstag der Anmeldung: 27.09.2000
(73) Patentinhaber: Byk-Chemie GmbH, 46483 Wesel (DE)
(72) Erfinder: Haubennestel, Karlheinz, 46487 Wesel (DE); Bubat, Alfred, 46487 Wesel-Bislich (DE)
(74) Vertreter: Leifert, Elmar, Dr.

(56) Entgegenhaltungen:
- EP-A- 0 538 685
- WO-A-92/05135

## Beschreibung

Die vorliegende Erfindung betrifft ein Verfahren zur Herstellung von modifizierten Vinyletherpolymeren.

Polyalkylvinylether sind interessante Polymere, die in vielfältiger Weise eingesetzt werden können, z. B. als Additive in Elektrotauchlacken, Verlaufmittel in Pulverlacken, Klebstoffe für Papier, Verdicker für wäßrige Systeme, Weichmacher für Harze und als Pflegemittel für Fußböden.

Die Homopolymeren werden bevorzugt durch kationische Polymerisation hergestellt, die radikalische Polymerisation führt zu schlechten Ausbeuten.

Für die Homopolymerisation werden bevorzugt die C₂ - C₄ Alkylvinylether eingesetzt, da diese Monomeren großtechnisch verfügbar sind.

Für bestimmte Anwendungen wären Modifikationen dieser Homopolymeren besser geeignet. Z. B. sind die Polybutylvinylether nicht wasserverträglich und können nur über externe Emulgatoren in eine Emulsion überführt werden oder über kompliziertere Verfahren, wie sie beschrieben sind in der EP-A-0 379 166. Die Herstellung von modifizierten Vinyletherpolymeren ist nur eingeschränkt möglich, da entsprechende Monomere nur bedingt erhältlich sind. Zwar wird in der Literatur die Umetherung von monomeren Vinylethem unter Austausch der Alkylgruppe zur Herstellung von neuen monomeren Vinylethern beschrieben (McKeon, J. E. Filton, P. Griswald, A.A. Tetrahedron 28, 227 (1972) und 28, 233 (1972) M.A. Smith, K.B. Wagener, Polymer Preprints 28, 264 (1987) J.P. 59055845A (1984), EP0 538 681. Die in dieser Literatur beschriebenen Vinylether stehen trotzdem großtechnisch nicht zur Verfügung.

Der vorliegenden Erfindung liegt die Aufgabe zugrunde, ein Verfahren zu finden, das es ermöglicht, einen leichten Zugang zu modifizierten Polyvinylalkylethern zu finden. Unter Modifizierung soll hier beispielsweise die Einführung von hydrophilen Gruppen verstanden werden, die die Wasserverträglichkeit verbessern. Es ist aber auch möglich, andere funktionelle oder reaktive Gruppen durch das erfindungsgemäße Verfahren in die als Ausgangsstoffe einzusetzenden Vinyletherpolymere einzuführen, um ihre Eigenschaften zu verändern. Auf diese Weise können modifizierte Vinyletherpolymere hergestellt werden, die durch Polymerisation entsprechender Monomere nicht erhältlich sind.

Überraschenderweise wurde diese Aufgabe dadurch gelöst, daß die nicht modifizierten Polyalkylvinylether einer Umetherungsreaktion unterzogen werden, wobei die Alkylreste des Polymeren partiell gegen andere Gruppen ausgetauscht werden. Bei dem erfindungsgemäßen Verfahren können beispielsweise
gesättigte aliphatische Alkohole wie Tridecylalkohol, Lauryalkohol, Stearylalkohol und Behenylalkohol,
ungesättigte aliphatische Alkohole wie Oleylalkohol, 1-Undecanol und 1-Hexenol, und
araliphatische Alkohole wie Benzylalkohol und Phenylethanol,
als Umetherungskomponente eingesetzt werden.

Gegenstand der Erfindung ist daher ein Verfahren der eingangs genannten Art, bei dem Vinyletherpolymere mit wiederkehrenden Einheiten der allgemeinen Formel (I) 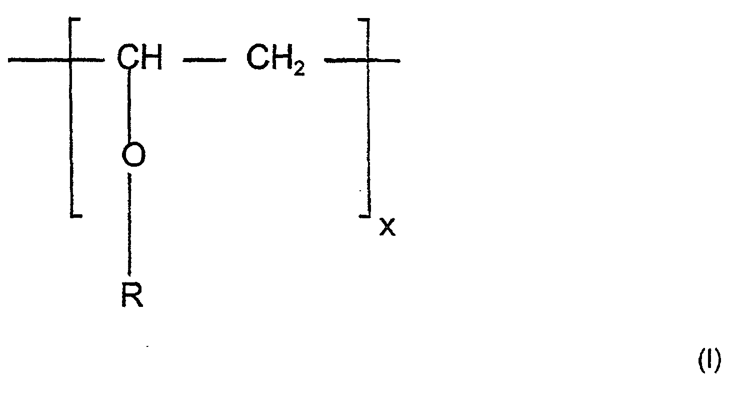 in der R für eine C₂-C₄ -Alkylgruppe steht und x eine ganze Zahl von 10 bis 1000 bedeutet, mit Verbindungen der allgemeinen Formel Y-OH, in der Y für aliphatische und/oder cycloaliphatische Kohlenwasserstoffgruppen mit 5 bis 30 Kohlenstoffatomen, deren Wasserstoffatome mindestens teilweise durch Halogenatome und/oder Arylreste ersetzt sein können, und/oder für aliphatische, cycloaliphatische und/oder aromatische Gruppen mit einem Molekulargewicht bis 6000 steht, die mindestens eine Ethergruppe -O- oder eine Estergruppe -COO- innerhalb des Moleküls enthalten, in Gegenwart von Verbindungen der Platinmetalle unter Freisetzung der entsprechenden C₂-C₄-Alkohole partiell umgeethert werden, wobei statistisch pro Molekül Vinyletherpolymer mindestens ein Rest R durch einen Rest Y ersetzt wird.

Vorzugsweise werden 0,5 bis 25 Mol-% der Reste R umgeethert. Besonders bevorzugt werden 1 bis 15 Mol-% und ganz besonders bevorzugt 2 bis 10 Mol-% der Reste R umgeethert.

Obwohl die Umetherung von monomeren Vinylethern, d. h. die Übertragung der Vinylgruppe von einem Vinylether oder Divinylether auf die OH-Gruppe eines anderen Alkohols, beschrieben wird, konnte kein Hinweis auf die Umetherung von polymeren Vinylethern gefunden werden. Überraschend ist das Gelingen dieser Umetherungsreaktion von polymeren Vinylethem, insbesondere da die Umetherung der ungesättigten Vinylether, die z. B. in der EP-A-0 538 681 beschrieben wird, oft in gesättigten Ethern wie Diethylether, Ethylenglykolether, Propylenglykolether, Butylenglykolether unter Einsatz der gleichen Katalysatoren durchgeführt wird, wie sie beim erfindungsgemäßen Verfahren eingesetzt werden (EP 0 538 681).

Als Katalysatoren werden Verbindungen aus der Kategorie der Platinmetalle eingesetzt, besonders bevorzugt Verbindungen des Platins, Palladiums, Rhodiums und Rutheniums. Ganz besonders bevorzugt werden Platinmetallkatalysatoren eingesetzt, wie z. B. Hexachloroplatinsäure, und Speier's Catalyst, wobei auch die Chelate von Platinverbindungen geeignet sind, wie z. B. solche mit 2,2-Bipyridin und Phenanthrolin.

Als Ausgangsverbindungen, d. h. als Vinyletherpolymere mit wiederkehrenden Einheiten der Formel I, werden z. B. handelsübliche Polyvinylalkylether unterschiedlichen Molekulargewichts eingesetzt, wie Polyvinylethylether (Lutonal ® A 25) oder Polyvinylisobutylether (Lutonal ® 30 oder Lutonal ® I 60).

Aber auch mittels kationischer Polymerisation nach bekannten Verfahren hergestellte C₂ - C₄ -Polyvinylalkylether unterschiedlicher Molekulargewichte und Zusammensetzung der Alkylreste sind brauchbar für dieses Verfahren.

Als Monohydroxyverbindungen der allgemeinen Formel Y-OH können alkalifreie aliphatische, cycloaliphatische und/oder araliphatische Verbindungen eingesetzt werden mit jeweils 5-30 Kohlenstoffatomen. Es können auch Gemische solcher Verbindungen eingesetzt werden.

Es können geradkettige und verzweigte aliphatische oder araliphatische Verbindungen eingesetzt werden. Sie können gesättigt oder ungesättigt sein. Gesättigte Verbindungen sind bevorzugt. Wasserstoffatome können teilweise durch Halogene, vorzugsweise durch Fluor und/oder auch Chlor ersetzt sein. Wenn derartig substituierte Verbindungen eingesetzt werden, handelt es sich vorzugsweise um aliphatische Monoalkohole. Derartige Produkte sind im Handel erhältlich, wobei, wie dem Fachmann bekannt, die der Hydroxylgruppe nahestehenden Kohlenstoffatome in der Regel keine Halogenatome aufweisen. Beispiele für spezielle fluorierte Alkohole sind Heptadecafluorodecanol oder C₆F₁₃CH₂CH₂OH. Die im Handel erhältlichen entsprechenden Produkte sind häufig nicht einheitlich, sondern Gemische von verschiedenen fluorierten Verbindungen, wie sie bei der technischen Synthese erhalten werden.

Als Monohydroxyverbindungen der Formel Y-OH können auch solche eingesetzt werden, die mindestens eine -O- und/oder Ester-Gruppe enthalten. Es handelt sich also hier um Mono- oder Polyether, Ester oder Polyester bzw. gemischte Polyether-Polyester. Die Verbindung Y-OH kann neben den Ethergruppen auch Amidgruppen und Harnstoffgruppen bzw. Amidgruppen oder Hamstoffgruppen alleine enthalten. Beispiele für esterhaltige Verbindungen bzw. Polyester sind solche, die durch Addition eines Lactons wie Propiolacton, Valerolacton, Caprolacton oder substituierte Derivate mittels einer Monohydroxystartkomponente erhalten werden können. Als Startkomponente werden Monoalkohole zweckmäßigerweise mit 1-30, vorzugsweise 4-14 C-Atomen, wie z. B. n-Butanol längerkettige, gesättigte und ungesättigte Alkohole wie Propargylalkohol, Oleylalkohol, Hexenol, Oxoalkohole, Cyclohexanol, Phenylethanol, Neopentylalkohol aber auch fluorierte Alkohole wie sie oben erwähnt sind, eingesetzt. Es können auch Alkohole der zuvor beschriebenen Art und substituierte und unsubstituierte Phenole durch Alkoxilierung nach bekannten Verfahren mit Ethylenoxid und/oder Propylenoxid in Polyoxyalkylen Monoalkyl-, Aryl-, Aralkyl- und Cycloalkylether überführt werden und diese Monohydroxypolyether in der vorgeschriebenen Art als Starterkomponente für die darauf folgende Lactonaddition eingesetzt werden. Jeweils können auch Gemische von vorgenannten Verbindungen eingesetzt werden.

Diese Lactonpolymerisation kann nach bekannten Verfahren, initiiert durch z. B. Paratoluolsulfonsäure oder Dibutylzinndilaurat, bei Temperaturen von etwa 100 °C bis 180 °C durchgeführt werden.

Verbindungen, die zumindest eine Ester-Gruppe enthalten, sind z. B. solche, wie sie erhalten werden bei der ringöffnenden Addition von Caprolacton an n-Butanol.

Diese Monoester sind meist nicht rein zu erhalten, sondern fallen in Mischungen mit höheren Homologen an, können aber durch Destillation in die Einzelkomponenten aufgetrennt werden.

Als Polyester haben sich solche, mit Molekulargewichten zwischen 350 und 6000 vorzugsweise mit Molekulargewichten zwischen 500 und 2000 bewährt.

Als Verbindungen der Formel Y-OH können auch Monohydroxy-(poly)ether eingesetzt werden, wie z. B. Methylglykol, Methyldiglykol, Ethylglykol und Butylglykol und deren höhere Homologe. Außerdem sind generell Monohydroxypolyether brauchbar, wie sie durch Alkoxilierung von Alkanolen, Cycloalkanolen und Phenolen erhalten werden. Diese Polyether haben zweckmäßig ein Molekulargewicht im Bereich von etwa 350 - 1500.

Verbindungen, die zumindest einen Amid- oder Harnstoffgruppe enthalten, sind solche, die erhalten werden durch Umsetzung von z. B. Ölsäure mit 3-Amino-1-propanol zum 3-Oleylamido-1-propanol oder durch Umsetzung von z. B. Phenylisocyanat mit 9-Amino-3,6-dioxanonan-1-ol zum 9-Phenylureido-3,6-dioxanonan-1-ol.

Beim Einsatz von Alkoholen in technischer Qualität, besonders bei Alkoxilaten, sind meistens geringe Mengen an difunktionellen Alkoholen vorhanden. Diese difunktionellen Alkohole können toleriert werden, auch wenn das Molekulargewicht des umgeetherten Polyvinylethers dadurch leicht ansteigt, in manchen Fällen ist dies sogar wünschenswert. Eine Übervernetzung sollte aber vermieden werden, da dann nicht mehr handhabbare gelartige Produkte entstehen.

Bei der erfindungsgemäßen Umetherungsreaktion können auch Mischungen der Alkohole Y-OH eingesetzt werden, z. B. Polyetheralkohole in Kombination mit Fluoralkoholen.

Die Umetherungsreaktion mit den Alkoholen Y-OH verläuft unter Einsatz der beschriebenen Katalysatoren, entweder in Substanz oder in geeigneten Lösemitteln, die selbst nicht an der Reaktion teilnehmen, es aber ermöglichen, die frei werdenden Alkohole, wie Ethanol, Propanole oder Butanole aus dem Reaktionsgemisch zu entfemen. Dies kann durch Anlegen von Vakuum unterstützt werden. Geeignete Umetherungstemperaturen liegen bei 50 °C bis 200 °C, bevorzugt bei 80 ° C bis 180 ° C, ganz besonders bevorzugt bei 100 °C bis 150 °C.

Die Reaktionszeit liegt je nach verwendeter Temperatur, Katalysatormenge und Umetherungsgrad zwischen ca. 2 und 10 Stunden und kann durch Messung des abdestillierten Alkohols kontrolliert werden.

Die für die Umetherung eingesetzten Platinmetallkatalysatoren können im Reaktionsgut verbleiben und sind aufgrund der geringen Einsatzmengen von 0,005 bis 0,05 % aktivem Katalysator nicht störend bei der weiteren Verwendung der modifizierten Polyvinylether. Es ist jedoch auch möglich, die Platinmetallverbindungen mittels bekannter Adsorptionsverfahren aus dem Reaktionsgut zu entfernen oder, wenn die Katalysatoren in heterogener Form vorliegen, diese nach der Reaktion durch einfache Filtration zu entfernen. Die Erhöhung des Katalysatoranteils über die angegebene Menge hinaus führt zu einer Reaktionszeitverkürzung, ist aber in den meisten Fällen nicht zu empfehlen, aufgrund der hohen Kosten der Platinmetalle.

Mit dem erfindungsgemäßen Verfahren lassen sich modifizierte Vinyletherpolymere auf einfache und wirtschaftliche Weise herstellen, wie dies in den nachfolgenden Beispielen 1 - 14 gezeigt wird.

In den folgenden Beispielen wird die Herstellung der erfindungsgemäßen Verbindungen beschrieben.

### Beispiel 1:

In einem mit Rührer, Thermometer und Destillationsaufsatz versehenden Glaskolben werden 340 g (ca.0,1 Mol) eines Polyvinylethylethers mit einem Molekulargewicht von ca.3400 (bestimmt mittels GPC mit Polystyrol als Standard) mit 68g (ca.0,06 Mol) eines Butanol gestarteten Polyethers mit der durchschnittlichen Formel CH₃(CH₂)₃-O(C₂H₄O)₁₀ (C₃H₆O)₁₀H versetzt,welches einem theoretischen Umetherungsgrad von 1,3 Mol% entspricht, und auf 80°C erwärmt. Nach Zugabe von
0,024 g Hexachloroplatinsäure gelöst in Isopropanol wird die Temperatur unter gleichzeitigem Anlegen von Vakuum auf 100°C erhöht und das entstehende Ethanol innerhalb von vier Stunden abdestilliert. Man erhält ein orangegelbes klares viskoses Produkt mit einer Hydroxylzahl von 2mg KOH/g. Das entspricht einer Umsetzung von ca. 90%, welches durch weitere analytische Untersuchungen mittels GC/MS und ¹³C-NMR bestätigt wird. Die Bildung von Ethanol während der Reaktion wird durch die GC/MS-Analyse bestätigt. Die erwartete Struktur nach der Umetherungsreaktion wird durch eine ¹³C-NMR-Analyse nachgewiesen.
Die Viskosität des resultierenden modifizierten Polyvinylethylethers beträgt bei 20°C 1200 mPas. Das Molekulargewicht 3700 (bestimmt mittels GPC mit Polystyrol als Standard) erhöht sich im Vergleich zur unumgesetzten Ausgangsmischung von 3700 auf 4800.
Das erhaltene Umetherungsprodukt zeigt im Vergleich zu einer Mischung der nicht umgesetzten Reaktionskomponenten eine deutlich verbesserte Emulgierbarkeit in Wasser.

Analog Beispiel 1 werden weitere modifizierte Polyvinylalkylether durch mittels Platinmetallverbindungen katalysierter Umsetzung mit hydroxyfunktionellen Verbindungen hergestellt (Tabelle1).

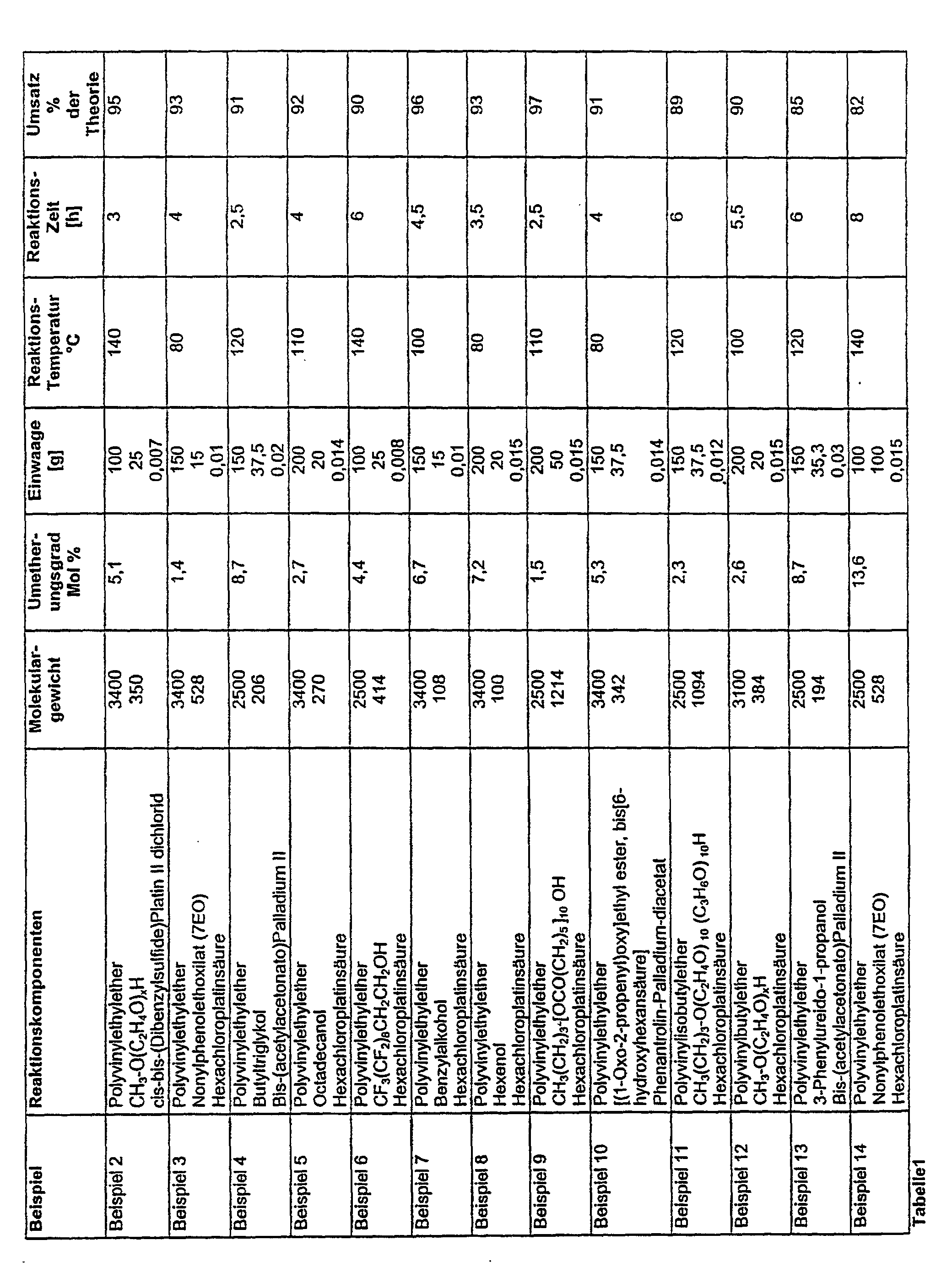

## Patentansprüche

1. Verfahren zur Herstellung von modifizierten Vinyletherpolymeren, bei dem Vinyletherpolymere mit wiederkehrenden Einheiten der allgemeinen Formel (I) 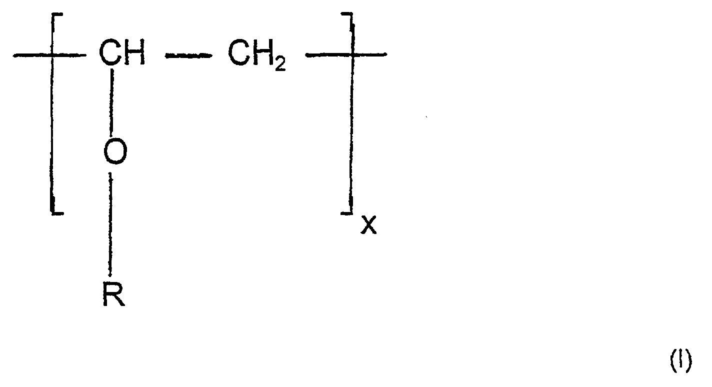 in der R für eine C₂ - C₄ -Alkylgruppe steht und x eine ganze Zahl von 10 bis 1000 bedeutet, mit Verbindungen der allgemeinen Formel Y-OH, in der Y für aliphatische und/oder cycloaliphatische Kohlenwasserstoffgruppen mit 5 bis 30 Kohlenstoffatomen, deren Wasserstoffatome mindestens teilweise durch Halogenatome und/oder Arylreste ersetzt sein können, und/oder für aliphatische, cycloaliphatische und/oder aromatische Gruppen mit einem Molekulargewicht bis 6000 steht, die mindestens eine Ethergruppe -O- oder eine Estergruppe -COO- innerhalb des Moleküls enthalten, in Gegenwart von Verbindungen der Platinmetalle unter Freisetzung der entsprechenden C₂- C₄-Alkohole partiell umgeethert werden, wobei statistisch pro Molekül Vinyletherpolymer mindestens ein Rest R durch einen Rest Y ersetzt wird.

2. Verfahren nach Anspruch 1, **dadurch gekennzeichnet, daß** als Katalysatoren Verbindungen des Platins, Palladiums, Rhodiums und/oder Rutheniums verwendet werden.

3. Verfahren nach Anspruch 1 oder 2, **dadurch gekennzeichnet, daß** die Umetherung bei einer Temperatur von 50° bis 200°C, besonders bevorzugt bei 100° bis 150°C, durchgeführt wird.

4. Verfahren nach einem oder mehreren der Ansprüche 1 bis 3, **dadurch gekennzeichnet, daß** 0,5 bis 25 Mol-% der Reste R umgeethert werden.

## Claims

1. A method of producing modified vinyl ether polymers, wherein vinyl ether polymers comprising recurring units of general formula (I) 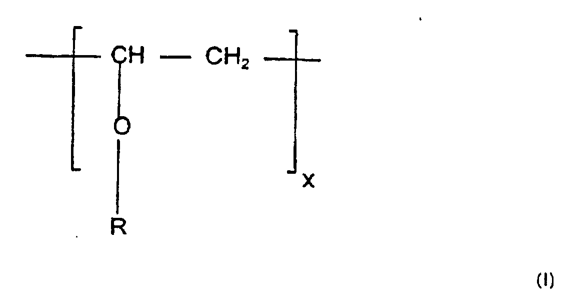 where R represents a C₂-C₄ alkyl group and x denotes an integer from 10 to 1000, are partially transetherified with compounds of general formula Y-OH, wherein Y represents aliphatic and/or cycloaliphatic hydrocarbon groups comprising 5 to 30 carbon atoms, the hydrogen atoms of which can be replaced at least in part by halogen atoms and/or aryl radicals, and/or represents aliphatic, cycloaliphatic and/or aromatic groups with a molecular weight of up to 6000 which contain at least one ether group -O- or an ester group -COO- within the molecule, in the presence of compounds of the platinum metals with the release of the corresponding C₂ - C₄ alcohols, wherein statistically at least one R radical is replaced by a Y radical per molecule of vinyl ether polymer.

2. A method according to claim 1, **characterised in that** compounds of platinum, palladium, rhodium and/or ruthenium are used as catalysts.

3. A method according to claims 1 or 2, **characterised in that** transetherification is conducted at a temperature from 50° to 200°C, most preferably at 100° to 150°C.

4. A method according to one or more of claims 1 to 3, **characterised in that** 0.5 to 25 mol % of the R radicals are transetherified.

## Revendications

1. Procédé de préparation de polymères de vinyléther modifiés, dans lequel des polymères de vinyléther ayant des unités répétitives de formule générale (I) 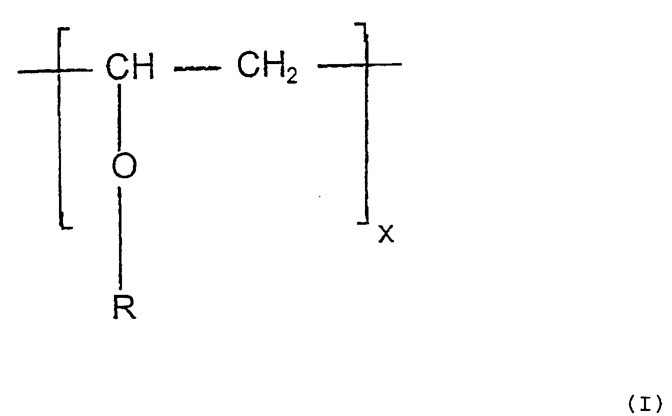 dans laquelle R représente un groupe alkyle en C₂-C₄ et x représente un nombre entier de 10-1000, sont soumis à une trans-éthérification au moyen de composés de formule générale Y-OH dans laquelle Y représente des groupes hydrocarbonés aliphatiques et/ou cycloaliphatiques comprenant 5 à 30 atomes de carbone, dont les atomes d'hydrogène peuvent être remplacés au moins en partie par des atomes d'halogène et/ou des restes aryle, et/ou représente des groupes aliphatiques, cycloaliphatiques et/ou aromatiques d'un poids moléculaire pouvant atteindre 6000, lesquels contiennent au moins un groupe éther -O- ou au moins un groupe ester -COO- au sein de la molécule, en présence de composés du métal platine, avec libération des alcools en C₂-C₄ correspondants partiellement transformés en éthers, ce par quoi statistiquement par molécule de polymère de vinyléther au moins un reste R est remplacé par un reste Y.

2. Procédé selon la revendication 1, **caractérisé en ce que** des composés du platine, du palladium, du rhodium et/ou du ruthénium sont utilisés en tant que catalyseurs.

3. Procédé selon la revendication 1 ou 2, **caractérisé en ce que** la trans-éthérification est effectuée à une température de 50 à 200°C, une plage de 100 à 150°C étant particulièrement préférée.

4. Procédé selon une ou plusieurs des revendications 1 à 3, **caractérisé en ce que** 0,5 à 25 % en moles des restes R sont trans-éthérifiés.
